# EUROPÄISCHE PATENTANMELDUNG

(11) **EP 2 535 601 A1**
(43) Veröffentlichungstag der Anmeldung: **19.12.2012**
(21) Anmeldenummer: 12169002.8
(22) Anmeldetag: 23.05.2012
(51) Int. Cl.: F16B 13/00, F16B 25/10, F16B 25/00

(54) **Ankerschraube**

(30) Priorität: 16.06.2011 DE 102011077595
(71) Anmelder: HILTI Aktiengesellschaft, 9494 Schaan (LI)
(72) Erfinder: Podesser, Richard, 9231 Köstenberg (AT); Echterbruch, Arne, 86916 Kaufering (DE); Schwalbach, Lothar, 86937 Scheuring (DE)

(57) **Zusammenfassung**

Bei einer selbstbohrende Ankerschraube (1) zur Anwendung im Berg-, Tunnel-, Hoch- oder Tiefbau und zum Einschrauben in Gestein oder ein Bauwerk, umfassend einen Schraubenschaft (2), der ein vorderes Ende (3) und ein hinteres Ende (4) aufweist, einen an dem vorderen Ende (3) des Schraubenschaftes (2) ausgebildeten Bohrkopf (5), ein selbstschneidendes Gewinde (9) zur Befestigung der Ankerschraube (1) in einer mit dem Bohrkopf (5) eingearbeiteten Bohrung, soll die Ankerschraube (1) mit einem geringen technischen Aufwand preiswert und zuverlässig befestigt werden können.

Diese Aufgabe wird dadurch gelöst, dass die Ankerschraube (1) ein Befestigungselement (7) als separates Bauteil in Ergänzung zu dem Schraubenschaft (2) umfasst und das selbstschneidende Gewinde (9) an dem Befestigungselement (7) ausgebildet ist.

## Beschreibung

Die vorliegende Erfindung betrifft eine Ankerschraube gemäß dem Oberbegriff des Anspruches 1 und ein Verfahren zur Befestigung einer Ankerschraube gemäß dem Oberbegriff des Anspruches 11.

Ankerschrauben werden für die verschiedensten technischen Anwendungen eingesetzt, um an der Ankerschraube einen Gegenstand zu befestigen. Beispielsweise können mit Ankerschrauben im Hochbau an Wänden aus Beton Gegenstände befestigt werden oder im Tunnelbau im anstehenden Gestein ebenfalls mit einer Ankerschraube ein Gegenstand befestigt werden. Hierzu wird zunächst mit einem Bohrgerät eine Bohrung in das Material, zum Beispiel Gestein oder Beton, eingearbeitet und anschließend wird die Ankerschraube mit einem selbstschneidenden Gewinde in die Bohrung eingeschraubt, wobei der Durchmesser des selbstschneidenden Gewindes größer ist als der Durchmesser der Bohrung, sodass sich das selbstschneidende Gewinde in das Material selbst einschneidet und eine formschlüssige Verbindung zwischen dem Material und dem selbstschneidenden Gewinde herstellt. Dadurch sind jedoch zwei Arbeitsgänge erforderlich, nämlich zunächst das Einarbeiten der Bohrung mit einem Bohrer und anschließend das Einbringen der Ankerschraube.

Abweichend hiervon sind auch selbstbohrende Ankerschrauben bekannt, welche über einen Bohrkopf an dem Schraubenschaft verfügen. Bei diesen selbstbohrenden Ankerschrauben kann in einem Arbeitsgang mit Hilfe des Bohrkopfes an einem vorderen Ende des Schraubenschaftes eine Bohrung in das Material eingearbeitet und mit dem selbstschneidenden Gewinde an dem Schraubenschaft eine formschlüssige Verbindung zwischen der Ankerschraube und dem die Bohrung begrenzenden Material hergestellt werden.

Aus der US 5 190 425 ist eine selbstbohrende Ankerschraube bekannt. Die Ankerschraube weist einen Schraubenschaft auf und an dem vorderen Ende des Schraubenschaftes ist ein Bohrkopf angeordnet. Ferner ist der Schraubenschaft mit einem selbstschneidenden Gewinde versehen und der Durchmesser des Schraubenschaftes im Bereich des selbstschneidenden Gewindes ohne dem selbstschneidenden Gewinde entspricht im Wesentlichen dem Durchmesser des Bohrkopfes.

Die EP 1 760 331 A2 zeigt ein Befestigungselement für harte Untergründe, wie Betonmauerwerk oder dergleichen, mit einem zylinderförmigen Grundkörper, an dessen Außenseite zumindest bereichsweise ein selbstschneidendes Gewinde vorgesehen ist und der ein erstes Ende mit einem Bodenabschnitt sowie ein zweites, dem ersten Ende abgewandtes Ende aufweist, wobei der Grundkörper ein innenliegendes Angriffsmittel für ein Setzwerkzeug und eine zum zweiten Ende offene Aufnahme aufweist, die mit einem Lastangriffsmittel versehen ist, wobei sich die Aufnahme in Richtung des zweiten Endes an das Angriffsmittel anschließt, wobei das Angriffsmittel als durchgängige Öffnung im Bodenabschnitt ausgebildet ist.

Die Aufgabe der vorliegenden Erfindung besteht darin, eine Ankerschraube und ein Verfahren zur Befestigung einer Ankerschraube zur Verfügung zu stellen, bei denen die Ankerschraube mit einem geringen technischen Aufwand preiswert und zuverlässig befestigt werden kann.

Diese Aufgabe wird gelöst mit einer selbstbohrenden Ankerschraube zur Anwendung im Berg-, Tunnel-, Hoch- oder Tiefbau und zum Einschrauben in Gestein oder ein Bauwerk, umfassend einen Schraubenschaft, der ein vorderes Ende und ein hinteres Ende aufweist, einen an dem vorderen Ende des Schraubenschaftes ausgebildeten Bohrkopf, ein selbstschneidendes Gewinde zur Befestigung der Ankerschraube in einer mit dem Bohrkopf eingearbeiteten Bohrung, wobei die Ankerschraube ein Befestigungselement als separates Bauteil in Ergänzung zu dem Schraubenschaft umfasst und das selbstschneidende Gewinde an dem Befestigungselement ausgebildet ist. Das selbstschneidende Gewinde ist damit von dem Schraubenschaft entkoppelt an einem separaten Bauteil ausgebildet. Dadurch können mit einem Schraubenschaft in vorteilhafter Weise für unterschiedliche Materialien unterschiedliche Arten von selbstschneidendem Gewinde zur Verfügung gestellt werden, indem lediglich ein anderes Befestigungselement auf den Schraubenschaft aufgeschoben ist oder angeordnet wird. Ferner ist es dadurch möglich, dass aufgrund der Ausbildung als separates Bauteil das Befestigungselement axial bezüglich des Schraubenschaftes verschiebbar ist.

In einer zusätzlichen Ausgestaltung ist das Befestigungselement axial verschieblich an dem Schraubenschaft gelagert. Bei einer Ausbildung des selbstschneidenden Gewindes an dem Schraubenschaft kann mit dem selbstschneidenden Gewinde die Ankerschraube nur unzulänglich in dem Material befestigt werden, welches die Bohrung begrenzt. Beim Bohren der Bohrung mit einer selbstbohrenden Ankerschraube hängt die axiale Bohrbewegung von verschiedenen Umständen ab, insbesondere von dem anstehenden Gestein. Im Regelfall ist dabei die axiale Bewegung des Schraubenschaftes beim Bohren anders als die erforderliche axiale Bewegung aufgrund der Steigung des selbstschneidenden Gewindes. Somit kommt es im Stand der Technik zu Differenzen in der erforderlichen axialen Bewegung aufgrund der Steigung des selbstschneidenden Gewindes und der tatsächlichen axialen Geschwindigkeit aufgrund des Bohrfortschrittes mit dem Bohrkopf. Dadurch kann im Stand der Technik das selbstschneidende Gewinde dahingehend wirken, dass dieses das Material in Richtung zu dem Bohrlochmund fördert und somit die Festigkeit des Materials im Bereich des selbstschneidenden Gewindes vermindert und eine schlechtere Verbindung zwischen dem selbstschneidenden Gewinde und dem Material möglich ist. Bei einer erfindungsgemäßen Entkoppelung mit separaten Bauteilen des Befestigungselementes mit dem selbstschneidenden Gewinde, welches axial verschieblich auf dem Schraubenschaft gelagert ist, kann das Befestigungselement mit dem selbstschneidenden Gewinde axial entsprechend der Steigung des selbstschneidenden Gewindes in das Material eingeschraubt oder eingearbeitet werden.

In einer zusätzlichen Variante ist das Befestigungselement, insbesondere als eine Hülse ausgebildet, mit einer Öffnung ausgebildet, innerhalb der Öffnung der Schraubenschaft angeordnet und außenseitig an dem Befestigungselement ist das selbstschneidende Gewinde ausgebildet.

In einer ergänzenden Ausgestaltung ist von dem Schraubenschaft auf das Befestigungselement ein Drehmoment übertragbar, insbesondere mittels einer formschlüssigen Verbindung zwischen dem Befestigungselement an der Öffnung und dem Schraubenschaft. Zum Versetzen des Befestigungselementes in eine Rotationsbewegung mit einer Rotationsachse als einer Längsachse des Schraubenschaftes, kann somit der Schraubenschaft in eine Rotationsbewegung versetzt werden und diese wird auf das Befestigungselement übertragen, sodass dadurch das Befestigungselement in die Bohrung eingeschraubt wird.

Zweckmäßig ist an dem Befestigungselement an der Öffnung und an dem Schraubenschaft jeweils wenigstens eine Gleitfläche ausgebildet, die jeweils aufeinander liegen, und eine axiale Gleitlagerung des Befestigungselementes an dem Schraubenschaft bewirken und vorzugsweise bildet die jeweils wenigstens eine Gleitfläche die formschlüssige Verbindung zur Übertragung des Drehmomentes zusätzlich aus.

In einer ergänzenden Ausgestaltung weist die Öffnung des Befestigungselementes wenigstens eine Längsnut auf und zwischen der wenigstens einen Längsnut und dem Befestigungselement bildet sich ein Zwischenraum aus zur Durchleitung von Bohrmaterial und/oder eines Spülfluides. Durch die Längsnut kann dadurch in vorteilhafter Weise Bohrmaterial oder Spülfluid beim Bohren vom Bereich des Bohrkopfes zu dem Bohrlochmund gefördert werden und/oder Spülfluid vom Bohrlochmund zu dem Bohrkopf oder umgekehrt.

Vorzugsweise ist der Außendurchmesser des Befestigungselementes ohne das selbstschneidende Gewinde gleich groß oder kleiner als der maximale Durchmesser des Bohrkopfes. Zweckmäßig ist der Außendurchmesser des Befestigungselementes ohne das selbstschneidende Gewinde weniger als 20, 10, 5, 3, 2 oder 1 % kleiner als der maximalen Durchmesser des Bohrkopfes. Das selbstschneidende Gewinde schneidet sich somit in das nicht von dem Bohrkopf bearbeitete Material ein.

In einer zusätzlichen Ausgestaltung ist der Schraubenschaft außenseitig mit einer Profilierung zur Förderung des Bohrmateriales beim Bohren von dem Bohrkopf zu einem Bohrlochmund versehen und vorzugsweise ist die Profilierung schraubenlinienförmig, insbesondere teilschraubenlinienförmig, ausgebildet.

In einer ergänzenden Variante ist der Schraubenschaft in einen ersten Abschnitt im Bereich des vorderen Endes und in einen zweiten Abschnitt im Bereich des hinteren Endes unterteilt und der Schraubenschaft weist an dem ersten Abschnitt einen kleinen Durchmesser auf als an dem zweiten Abschnitt, so dass das Befestigungselement bei einer axialen Anordnung an dem ersten Abschnitt keine formschlüssige Verbindung mit dem Schraubenschaft aufweist. Bei einer axialen Bewegung zum Einschrauben des Befestigungselements besteht somit an dem ersten Abschnitt keine formschlüssige Verbindung mit dem Schraubenschaft und dadurch ist von dem Schraubenschaft an dem ersten Abschnitt kein Drehmoment mehr auf das Befestigungselement übertragbar. Bei einer lösbaren Verbindung des Schraubenschaftes an dem Bohrkopf kann dadurch, zum Beispiel mittels einer Schraubverbindung, der Schraubenschaft aus dem Bohrkopf ausgeschraubt und anschließend anderer Schraubenschaft eingefügt werden und mit dem Bohrkopf verbunden, zum Beispiel mittels der Schraubverbindung oder einer Bajonettverbindung.

Insbesondere ist der Schraubenschaft als ein Voll- oder ein Hohlquerschnitt ausgebildet und/oder an dem hinteren Ende des Schraubenschaftes ist ein Ankerkopf ausgebildet und/oder der Durchmesser des Befestigungselementes mit dem selbstschneidenden Gewinde ist größer als der maximale Durchmesser des Bohrkopfes, so dass mit dem eingeschraubten Befestigungselement der Bohrkopf und damit auch der mit dem Bohrkopf verbundene Schraubenschaft axial in der Bohrung befestigbar ist. An dem Ankerkopf ist vorzugsweise ein Mehrkant ausgebildet, um dadurch mittels eines Bohrwerkzeuges auf den Ankerkopf und damit auch auf den Schraubenschaft ein Drehmoment zur Bewegung des Schraubenschaftes aufbringen zu können.

Erfindungsgemäßes Verfahren zur Befestigung einer Ankerschraube, insbesondere in dieser Schutzrechtsanmeldung beschriebenen Ankerschraube, mit den Schritten: Einarbeiten einer Bohrung mit einem an einem Schraubenschaft ausgebildeten Bohrkopf, Befestigen der Ankerschraube mit einem selbstschneidenden Gewinde der Ankerschraube in der Bohrung, wobei das selbstschneidende Gewinde während des Einschraubens in das die Bohrung begrenzende Material eine axiale Bewegung relativ zu dem Schraubenschaft in Richtung zu einem vorderen Ende des Schraubenschaftes ausführt.

In einer zusätzlichen Ausgestaltung schneidet sich beim Einschrauben des selbstschneidenden Gewindes das Gewinde in das die Bohrung begrenzende Material, z. B. Gestein oder Beton, ein und/oder eine formschlüssige Verbindung wird zwischen dem Gewinde und dem die Bohrung begrenzenden Material hergestellt und/oder das selbstschneidende Gewinde ist an einem Befestigungselement ausgebildet als separates Bauteil zu dem Schraubenschaft und das Befestigungselement führt die axiale Bewegung relativ zu dem Schraubenschaft in Richtung zu einem vorderen Ende des Schraubenschaftes aus.

In einer ergänzenden Variante wird das selbstschneidende Gewinde während des Bohrens mit dem Bohrkopf in das die Bohrung begrenzende Material eingeschraubt und vorzugsweise führt das Befestigungselement die Rotationsbewegung des Schraubenschaftes zum Bohren mit dem Bohrkopf mit aus aufgrund einer Verbindung zwischen dem Schraubenschaft und dem Befestigungselement, welche ein Drehmoment von dem Schraubenschaft auf das Befestigungselement überträgt.

In einer weiteren Ausführungsform wird das selbstschneidende Gewinde nach dem, vorzugsweise teilweisen, Einarbeiten der Bohrung mit dem Bohrkopf in das die Bohrung begrenzende Material eingeschraubt.

Zweckmäßig wird das Befestigungselement mit dem selbstschneidenden Gewinde axial bis zu dem Bohrkopf oder mit einem Abstand von weniger als 10cm, 5cm oder 2 cm bis zu dem Bohrkopf beim Einschrauben in das die Bohrung begrenzende Material bewegt und/oder der Bohrkopf liegt auf dem eingeschraubten Befestigungselement auf, so dass der Bohrkopf und damit auch der Schraubenschaft axial mit dem Befestigungselement in der Bohrung befestigt wird.

In einer weiteren Ausgestaltung wird der Schraubenschaft mit dem Schraubenkopf manuell oder mit Bohrausrüstung in das Material eingebohrt.

In einer ergänzenden Variante wird der Schraubenschaft mit dem Schraubenkopf drehend bzw. rotierend oder drehschlagend und/oder mit einer Flüssigkeit oder Luft gespült oder mit einer Absaugung in das Material eingebohrt.

In einer zusätzlichen Ausführungsform ist zu Beginn des Einbohrens des Schraubenschaftes mit dem Bohrkopf das Befestigungselement axial im Bereich des hinteren Endes des Schraubenschaftes axial an dem Schraubenschaft angeordnet, so dass zu Beginn des Bohrvorganges sich das selbstschneidende Gewinde an dem Befestigungselement nicht in das die Bohrung begrenzende Material einschraubt.

In einer weiteren Ausgestaltung schneidet sich erst nach einem teilweisen Einbohren oder nach einem vollständigen Einbohren in der Endbohrtiefe des Schraubenschaftes mit dem Bohrkopf das Befestigungselement mit dem selbstschneidenden Gewinde in das die Bohrung begrenzende Material ein, da das Befestigungselement zu Beginn des Bohrvorganges axial im Bereich des hinteren Endes des Schraubenschaftes axial an dem Schraubenschaft angeordnet ist und erst anschließend bewegt sich das Befestigungselement axial in Richtung zu dem vorderen Ende des Schraubenschaftes.

In einer ergänzenden Variante wird erst nach einem Einbohren des Schraubenschaftes mit dem Bohrkopf das Befestigungselement auf dem Schraubenschaft aufgesteckt und manuell oder motorgetrieben eingeschraubt.

In einer zusätzlichen Ausgestaltung wird nach dem Einbohren des Schraubenschaftes mit dem Bohrkopf ein erhärtbares Fixierungsmaterial, z. B. Kunstharz oder Zementmörtel, ein einen Raum zwischen der Ankerschraube und dem die Bohrung begrenzenden Material eingebracht. Damit kann die Tragfähigkeit der Ankerschraube mit einem Injektionsverfahren weiter erhöht werden.

Vorzugsweise wird das erhärtbare Fixierungsmaterial durch einen Längskanal an dem Schraubenschaft bei einer Ausbildung des Schraubenschaftes als Hohlquerschnitt eingebracht.

Zweckmäßig besteht die Ankerschraube wenigstens teilweise, insbesondere vollständig, aus Metall, z. B. Stahl, oder, vorzugsweise faserverstärktem Kunststoff, z. B. GFK.

Im Nachfolgenden werden Ausführungsbeispiele der Erfindung unter Bezugnahme auf die beigefügten Zeichnungen näher beschrieben. Es zeigen:
- Fig. 1: eine Seitenansicht eines Schraubenschaftes in einem ersten Ausführungsbeispiel und ein Befestigungselement in einem Längsschnitt,
- Fig. 2: einen Querschnitt des Schraubenschaftes und des Befestigungselementes gemäß Fig. 1 und
- Fig. 3: eine Seitenansicht des Schraubenschaftes in einem zweiten Ausführungsbeispiel und das Befestigungselement in einem Längsschnitt.

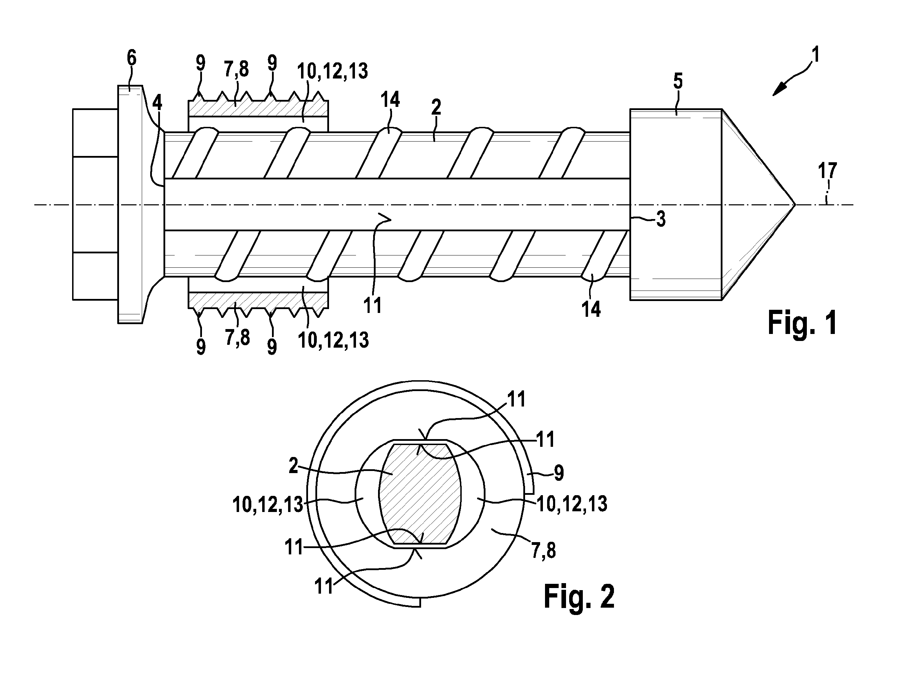

Eine in Fig. 1 und 2 in einem ersten Ausführungsbeispiel dargestellte selbstbohrende Ankerschraube 1 dient dazu, um mit Hilfe der Ankerschraube 1 einen Gegenstand zu befestigen. Die Ankerschraube 1 wird beispielsweise im Hochbau dazu eingesetzt, um an Betonwänden oder Decken Gegenstände zu befestigen oder im Bergbau, um im anstehenden Gestein im Tunnel ebenfalls einen Gegenstand zu befestigen.

Die Ankerschraube 1 weist einen Schraubenschaft 2 als Vollquerschnitt auf mit einem vorderen Ende 3 und einem hinteren Ende 4. Am vorderen Ende 3 ist an dem Schraubenschaft 2 ein Bohrkopf 5 befestigt und am hinteren Ende 4 des Schraubenschaftes 2 ist ein Ankerkopf 6 befestigt.

Ein als Hülse 8 ausgebildetes Befestigungselement 7 weist eine Öffnung 10 auf. Das Befestigungselement 7 ist auf den Schraubenschaft 2 aufgeschoben (Fig. 1 und 2), sodass dadurch der Schraubenschaft 2 innerhalb der Öffnung 10 des Befestigungselements 7 angeordnet ist. Das Befestigungselement 7 ist an seiner radialen Außenseite mit einem selbstschneidenden Gewinde 9 versehen. Die Öffnung 10 ist ferner mit zwei ebenen Gleitflächen 11 versehen und der Schraubenschaft 2 weist ebenfalls zwei ebene Gleitflächen 11 auf. Die beiden Gleitflächen 11 an dem Schraubenschaft 2 liegen auf den beiden Gleitflächen 11 an der Öffnung 10 des Befestigungselements 7 auf, sodass dadurch eine formschlüssige Verbindung zur Übertragung eines Drehmoments von dem Schraubenschaft 2 auf das Befestigungselement 7 besteht. Das Befestigungselement 7 weist ferner zwei Längsnuten 12 auf, sodass sich zwischen dem Befestigungselement 7 und dem Schraubenschaft 2 zwei Zwischenräume 13 ausbilden. Durch diese Zwischenräume 13 kann Bohrmaterial oder Spülfluid geleitet werden. Ferner ist der Schraubenschaft 2 außenseitig außerhalb der beiden Gleichflächen 11 mit einer schraubenlinienförmigen Profilierung 14 versehen. Mit Hilfe der Profilierung 14 kann Bohrmaterial von dem Bohrkopf 5 in Richtung zu dem hinteren Ende 4 bzw. einem Bohrlochmund einer mit dem Bohrkopf 5 einzuarbeitenden Bohrung gefördert werden.

Zum Befestigen der selbstbohrenden Ankerschraube 1, beispielsweise in einer Betonwand oder in anstehendem Gestein bei einem Tunnel, wird mit einem Bohrgerät auf den Ankerkopf 6 ein Drehmoment aufgebracht und dadurch der Ankerkopf 6, der Schraubenschaft 2 und der Bohrkopf 5 in eine Rotationsbewegung um die Längsachse 17 des Schraubenschaftes 2 versetzt. Dadurch wird mit dem Bohrkopf 5 eine Bohrung in das Material eingearbeitet und zu Beginn der Bohrung besteht kein Kontakt zwischen dem Befestigungselement 7 und dem Material, in welchem die Bohrung eingearbeitet wird, weil zu Beginn der Bohrung das Befestigungselement 7 im Bereich des hinteren Endes 4 des Schraubenschaftes 2, zum Beispiel aufliegend auf dem Ankerkopf 6, angeordnet ist. Erst mit Erreichen einer vorgegebenen Bohrlochtiefe kommt es zu einem Kontakt zwischen dem Befestigungselement 7 und dem Material, welches die Bohrung begrenzt. Dabei führt das Befestigungselement 7 die Dreh- bzw. Rotationsbewegung des Schraubenschaftes 2 um die Längsachse 17 mit aus, aufgrund der formschlüssigen Verbindung an den beiden Gleitflächen 11. Das selbstschneidende Gewinde 9 schneidet sich somit unabhängig vom Bohrfortschritt bzw. der axialen Bewegung während des Bohrens mit dem Bohrkopf 6 allein aufgrund der Steigung des selbstschneidenden Gewindes 9 in das Material ein und das Befestigungselement 7 bewegt sich in axialer Richtung in Richtung zu dem Bohrkopf 5 bzw. dem vorderen Ende 3 des Schraubenschaftes 2 bis das Befestigungselement 7 auf dem Bohrkopf 5 aufliegt. Nach oder kurz vor dem Aufliegen des Befestigungselements 7 an dem Bohrkopf 5 wird das Bohrgerät abgeschaltet und dadurch führen Schraubenschaft 2 und das Befestigungselement 7 keine Rotationsbewegung mehr aus. Das Befestigungselement 7 stellt mit dem selbstschneidenden Gewinde 9 eine formschlüssige Verbindung zwischen dem die Bohrung begrenzenden Material und dem selbstschneidenden Gewinde 9 her. Eine axiale Bewegung in Richtung zu dem Bohrlochmund ist dabei für den Schraubenschaft 2 ausgeschlossen, weil der Schraubenschaft 2 fest mit dem Bohrkopf 5 verbunden ist und der Bohrkopf 5 axial auf dem Befestigungselement 7 aufliegt (nicht dargestellt). Dadurch ist die Ankerschraube 1 fest in der Bohrung verankert.

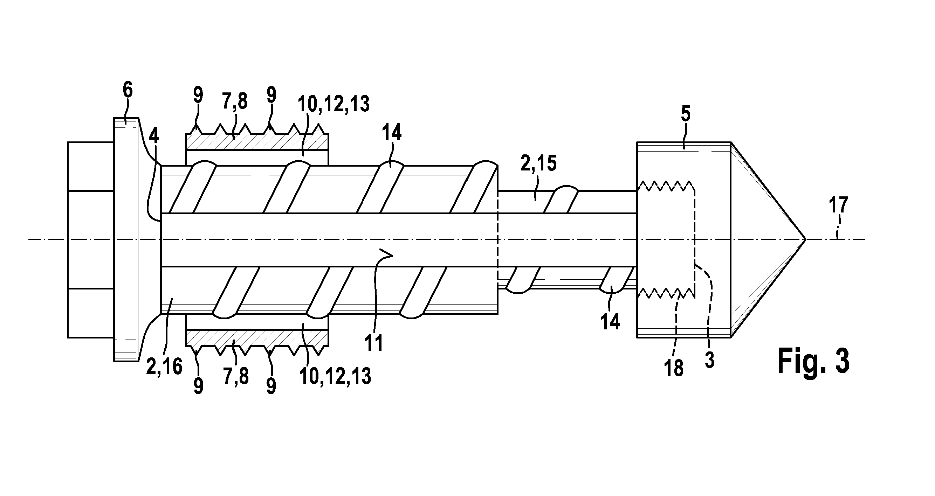

In Fig. 3 ist ein zweites Ausführungsbeispiel des Schraubenschaftes 2 bzw. der Ankerschraube 1 dargestellt. Im Nachfolgenden werden im Wesentlichen nur die Unterschiede zu dem ersten Ausführungsbeispiel gemäß Fig. 1 beschrieben. Der Schraubenschaft 2 ist in einen ersten Abschnitt 15 und in einen zweiten Abschnitt 16 unterteilt. Der erste Abschnitt 15 weist einen kleineren Durchmesser als der zweite Abschnitt 16 auf, sodass an dem ersten Abschnitt 15 keine formschlüssige Verbindung an den beiden Gleitflächen 11 zwischen dem Schraubenschaft 2 und dem Befestigungselement 7 besteht. Der Schraubenschaft 2 ist mit einer lösbaren Verbindungseinrichtung, zum Beispiel einer Schraubverbindung 18 oder einer Bajonettverbindung, lösbar mit dem Bohrkopf 5 verbunden. Nach dem Einarbeiten der Bohrung mit dem Bohrkopf 5 und dem Bewegen des Befestigungselements 7 vollständig zu dem ersten Abschnitt 15 an dem Bohrkopf 5 und dem Aufliegen des Befestigungselements 7 an dem Bohrkopf 5 kann somit der Schraubenschaft 2 in eine Rotationsbewegung versetzt werden ohne dass das Befestigungselement 7 eine Rotationsbewegung mit ausführt und der Schraubenschaft 2 kann mittels der Schraubverbindung 18 von dem Bohrkopf 5 gelöst und anschließend ein anderer Schraubenschaft 2 in den Bohrkopf 5 eingeschraubt und befestigt werden. Dabei kann der Schraubenschaft 2 zum Einarbeiten der Bohrung mit dem Bohrkopf 5 auch als ein Bohrgestänge ausgebildet sein und erst anschließend wird ein Schraubenschaft 2, beispielsweise mit einer anderen Länge, an dem Bohrkopf 5 mittels der Schraubverbindung 18 befestigt und damit letztendlich auch der Schraubenschaft 2 mit dem Befestigungselement 7 in der Bohrung befestigt.

Insgesamt betrachtet sind mit der erfindungsgemäßen Ankerschraube 1 wesentliche Vorteile verbunden. Aufgrund der Ausbildung des selbstschneidenden Gewindes 9 an dem separaten Befestigungselement 7 in Ergänzung zu dem Schraubenschaft 2 kann beim Einschneiden des selbstschneidenden Gewindes 9 in das Material, welches die Bohrung begrenzt, das selbstschneidende Gewinde 9 diejenige axiale Bewegung aufgrund der Steigung des selbstschneidenden Gewindes 9 ausführen, welche die Steigung des selbstschneidenden Gewindes 9 vorgibt. Dadurch ist eine besonders sichere, zuverlässige und hohe Kräfte aufnehmende formschlüssige Verbindung zwischen dem selbstschneidenden Gewinde 9 und dem Material bei der selbstbohrenden Ankerschraube 1 möglich. Ferner können an einem identischen Schraubenschaft 2 mit dem Bohrkopf 5 unterschiedliche Befestigungselemente 7 mit entsprechend angepassten selbstschneidenden Gewinden 9 für unterschiedliche Materialien aufgeschoben werden. Dadurch kann mit der Ankerschraube 1 die Verbindung zwischen dem selbstschneidenden Gewinde 9 und dem Material zusätzlich verbessert werden.

## Patentansprüche

1. Selbstbohrende Ankerschraube (1) zur Anwendung im Berg-, Tunnel-, Hoch- oder Tiefbau und zum Einschrauben in Gestein oder ein Bauwerk, umfassend
- einen Schraubenschaft (2), der ein vorderes Ende (3) und ein hinteres Ende (4) aufweist,
- einen an dem vorderen Ende (3) des Schraubenschaftes (2) ausgebildeten Bohrkopf (5),
- ein selbstschneidendes Gewinde (9) zur Befestigung der Ankerschraube (1) in einer mit dem Bohrkopf (5) eingearbeiteten Bohrung,
**dadurch gekennzeichnet, dass**
die Ankerschraube (1) ein Befestigungselement (7) als separates Bauteil in Ergänzung zu dem Schraubenschaft (2) umfasst und das selbstschneidende Gewinde (9) an dem Befestigungselement (7) ausgebildet ist.

2. Ankerschraube nach Anspruch 1,
**dadurch gekennzeichnet, dass**
das Befestigungselement (7) axial verschieblich an dem Schraubenschaft (2) gelagert ist.

3. Ankerschraube nach Anspruch 1 oder 2,
**dadurch gekennzeichnet, dass**
das Befestigungselement (7), insbesondere als eine Hülse (8) ausgebildet, mit einer Öffnung (10) ausgebildet ist, innerhalb der Öffnung (10) der Schraubenschaft (2) angeordnet und außenseitig an dem Befestigungselement (7) das selbstschneidende Gewinde (9) ausgebildet ist.

4. Ankerschraube nach einem oder mehreren der vorhergehenden Ansprüche,
**dadurch gekennzeichnet, dass**
von dem Schraubenschaft (2) auf das Befestigungselement (7) ein Drehmoment übertragbar ist, insbesondere mittels einer formschlüssigen Verbindung zwischen dem Befestigungselement (7) an der Öffnung (10) und dem Schraubenschaft (2).

5. Ankerschraube nach einem oder mehreren der vorhergehenden Ansprüche,
**dadurch gekennzeichnet, dass**
an dem Befestigungselement (7) an der Öffnung (10) und an dem Schraubenschaft (2) jeweils wenigstens eine Gleitfläche (11) ausgebildet ist, die jeweils aufeinander liegen, und eine axiale Gleitlagerung des Befestigungselementes (7) an dem Schraubenschaft (2) bewirken und vorzugsweise die jeweils wenigstens eine Gleitfläche (11) die formschlüssige Verbindung zur Übertragung des Drehmomentes zusätzlich ausbildet.

6. Ankerschraube nach einem oder mehreren der Ansprüche 3 bis 5, **dadurch gekennzeichnet, dass**
die Öffnung (10) des Befestigungselementes (7) wenigstens eine Längsnut (12) aufweist und sich zwischen der wenigstens einen Längsnut (12) und dem Befestigungselement (7) ein Zwischenraum (13) ausbildet zur Durchleitung von Bohrmaterial und/oder eines Spülfluides.

7. Ankerschraube nach einem oder mehreren der vorhergehenden Ansprüche,
**dadurch gekennzeichnet, dass**
der Außendurchmesser des Befestigungselementes (7) ohne dem selbstschneidenden Gewinde (9) gleich groß oder kleiner ist als der maximale Durchmesser des Bohrkopfes (5).

8. Ankerschraube nach einem oder mehreren der vorhergehenden Ansprüche,
**dadurch gekennzeichnet, dass**
der Schraubenschaft (2) außenseitig mit einer Profilierung (14) zur Förderung des Bohrmateriales beim Bohren von dem Bohrkopf (5) zu einem Bohrlochmund versehen ist und vorzugsweise die Profilierung (14) schraubenlinienförmig, insbesondere teilschraubenlinienförmig, ausgebildet ist.

9. Ankerschraube nach einem oder mehreren der vorhergehenden Ansprüche,
**dadurch gekennzeichnet, dass**
der Schraubenschaft (2) in einen ersten Abschnitt (15) im Bereich des vorderen Endes (3) und in einen zweiten Abschnitt (16) im Bereich des hinteren Endes (4) unterteilt ist und der Schraubenschaft (2) an dem ersten Abschnitt (15) einen kleinen Durchmesser aufweist als an dem zweiten Abschnitt (16), so dass das Befestigungselement (7) bei einer axialen Anordnung an dem ersten Abschnitt (15) keine formschlüssige Verbindung mit dem Schraubenschaft (2) aufweist.

10. Ankerschraube nach einem oder mehreren der vorhergehenden
Ansprüche,
**dadurch gekennzeichnet, dass**
der Schraubenschaft (2) als ein Voll- oder ein Hohlquerschnitt ausgebildet ist
und/oder
an dem hinteren Ende (4) des Schraubenschaftes (2) ein Ankerkopf (6) ausgebildet ist
und/oder
der Durchmesser des Befestigungselementes (7) mit dem selbstschneidenden Gewinde (9) größer ist als der maximale Durchmesser des Bohrkopfes (5), so dass mit dem eingeschraubten Befestigungselement (7) der Bohrkopf (5) und damit auch der mit dem Bohrkopf (5) verbundene Schraubenschaft (2) axial in der Bohrung befestigbar ist.

11. Verfahren zur Befestigung einer Ankerschraube (1), insbesondere
einer Ankerschraube (1) gemäß einem oder mehreren der vorhergehenden Ansprüche, mit den Schritten:
- Einarbeiten einer Bohrung mit einem an einem Schraubenschaft (2) ausgebildeten Bohrkopf (5),
- Befestigen der Ankerschraube (1) mit einem selbstschneidenden Gewinde (9) der Ankerschraube (1) in der Bohrung,
**dadurch gekennzeichnet, dass**
das selbstschneidende Gewinde (9) während des Einschraubens in das die Bohrung begrenzende Material eine axiale Bewegung relativ zu dem Schraubenschaft (2) in Richtung zu einem vorderen Ende (3) des Schraubenschaftes (2) ausführt.

12. Verfahren nach Anspruch 11,
**dadurch gekennzeichnet, dass**
beim Einschrauben des selbstschneidenden Gewindes (9) sich das Gewinde (9) in das die Bohrung begrenzende Material, z. B. Gestein oder Beton, einschneidet
und/oder
eine formschlüssige Verbindung zwischen dem Gewinde (9) und dem die Bohrung begrenzenden Material hergestellt wird und/oder
das selbstschneidende Gewinde (9) an einem Befestigungselement (7) ausgebildet ist als separates Bauteil zu dem Schraubenschaft (2) und das Befestigungselement (7) die axiale Bewegung relativ zu dem Schraubenschaft (2) in Richtung zu einem vorderen Ende (3) des Schraubenschaftes (2) ausführt.

13. Verfahren nach Anspruch 11 oder 12,
**dadurch gekennzeichnet, dass**
das selbstschneidende Gewinde (9) während des Bohrens mit dem Bohrkopf (5) in das die Bohrung begrenzende Material eingeschraubt wird und vorzugsweise das Befestigungselement (7) die Rotationsbewegung des Schraubenschaftes (2) zum Bohren mit dem Bohrkopf (5) mit ausführt aufgrund einer Verbindung zwischen dem Schraubenschaft (2) und dem Befestigungselement (7), welche ein Drehmoment von dem Schraubenschaft (2) auf das Befestigungselement (7) überträgt.

14. Verfahren nach einem oder mehreren der Ansprüche 11 oder 13, **dadurch gekennzeichnet, dass**
das selbstschneidende Gewinde (9) nach dem, vorzugsweise teilweisen, Einarbeiten der Bohrung mit dem Bohrkopf (5) in das die Bohrung begrenzende Material eingeschraubt wird.

15. Verfahren nach einem oder mehreren der Ansprüche 11 bis 14,
**dadurch gekennzeichnet, dass**
das Befestigungselement (7) mit dem selbstschneidenden Gewinde (9) axial bis zu dem Bohrkopf (5) oder mit einem Abstand von weniger als 10cm, 5cm oder 2 cm bis zu dem Bohrkopf (5) beim Einschrauben in das die Bohrung begrenzende Material bewegt wird und/oder
der Bohrkopf (5) auf dem eingeschraubten Befestigungselement (7) aufliegt, so dass der Bohrkopf (5) und damit auch der Schraubenschaft (2) axial mit dem Befestigungselement (7) in der Bohrung befestigt wird.
